Europäisches Patentamt

(19) European Patent Office

Office européen des brevets

(11) Publication number: **0 011 378**
**B1**

(12) **EUROPEAN PATENT SPECIFICATION**

(45) Date of publication of patent specification: **13.07.83**

(51) Int. Cl.³: **F 16 F 15/26**

(21) Application number: **79302190.8**

(22) Date of filing: **11.10.79**

(54) An internal combustion engine having a balancing device.

(30) Priority: **12.10.78 JP 126008/78**

(43) Date of publication of application:
**28.05.80 Bulletin 80/11**

(45) Publication of the grant of the patent:
**13.07.83 Bulletin 83/28**

(84) Designated Contracting States:
**DE FR GB**

(56) References cited:
**DE - A - 2 338 865**
**DE - C - 522 065**
**FR - A - 2 328 842**
**GB - A - 722 783**
**US - A - 2 304 892**

(73) Proprietor: **KUBOTA LIMITED**
**No. 22, 2-chome Funade-machi Naniwa-ku**
**Osaka-shi Osaka 556 (JP)**

(72) Inventor: **Sakano, Kenji**
**c/o Kubota Limited Sakai Seizosho**
**64 Ismizukitamachi Sakaishi, Osaka (JP)**
Inventor: **Yamashita, Masahiro**
**c/o Kubota Limited Sakai Seizosho**
**64 Ismizukitamachi Sakaishi, Osaka (JP)**
Inventor: **Yamashita, Kenji**
**c/o Kubota Limited Sakai Seizosho**
**64 Ismizukitamachi Sakaishi, Osaka (JP)**
Inventor: **Aketa, Masahiro**
**c/o Kubota Limited Sakai Seizosho**
**64 Ismizukitamachi Sakaishi, Osaka (JP)**

(74) Representative: **Valentine, Francis Anthony**
**Brinsley et al,**
**REDDIE & GROSE 16 Theobalds Road**
**London WC1X 8PL (GB)**

Courier Press, Leamington Spa, England.

## An internal combustion engine having a balancing device

This invention relates to a reciprocating piston, internal combustion engines having balancing devices.

When reciprocating piston, internal combustion engines are operated, they inherently generate vibrations originating from the centre-line of the engine crankshaft and oriented along a vibration line which passes through the centre-line. A vibrating force $\vec{F}_r$ generated by an engine and transmitted from the crankshaft can be annoying and disruptive, and efforts have been made to counteract it and the vibrations resulting therefrom.

Balancing devices which can be attached to an engine, and which will generate a balancing force $\vec{F}_b$ to oppose the vibrating force $\vec{F}_r$ are known. However, in these balancing devices it has been necessary to locate the device in a position on the engine in which the balancing force $\vec{F}_b$ generated by the device is aligned with the vibration line S and the point O on the centre-line of the crankshaft from which the vibrations emanate. This has severely limited the choices for the location of known balancing devices, and has caused engines to which they are attached to be unusually bulky and to have unacceptably large cross sections in the vicinity of where the balancing devices are mounted.

U.K. Patent Specification No. 722783 and French Patent Application No. 7532538 (published under Serial No. 2328842) each describe a reciprocating piston, internal combustion engine having a balancing device which generates a balancing force directed along the line of action of a vibrating force developed during operation of the engine.

A principal reason known balancing devices have been limited to mounting locations on the vibration line S of the engine is that if located a distance l away from such vibration line S, their operation will generate an oscillatory moment $\vec{M}$ which will then create a further undesirable effect during operation.

According to the present invention there is provided a reciprocating piston, internal combustion engine having a balancing device for generating a balancing force to counter a vibrating force generated during operation of the engine and directed along a vibration line passing through the centre-line of a crankshaft of the engine, characterised in that the device is positioned with th⋯ ⋯⋯e of action of the balancing force spaced ⋯ ⋯ and parallel to the vibration line and in tha⋯ ⋯e device comprises balancing means for generating a balancing force chosen to cancel a selected harmonic component of the vibrating force and for generating a balancing moment to cancel the oscillatory moment generated about the centre-line of the crankshaft of the balancing force.

The balancing device of the present invention can be located at substantially any position on an internal combustion engine, so that unused empty spaces found about the typical engine can be utilized. The device generates a balancing force $\vec{F}_b$, and is located a distance l from the engine vibration line S. Any oscillatory moment $\vec{M}$ generated because the device is spaced from the vibration line S is cancelled by a balancing moment $-\vec{M}$, also generated by the balancing device. The balancing device assures smoother engine operation.

Conveniently, the balancing device is driven from the crankshaft of the engine, to ensure operation synchronous with the engine's reciprocating pistons and rotating crankshaft. Such a device can include three or more rotating balancers, arranged to rotate about axes that are disposed parallel to each other and to the central axis of the engine crankshaft. One of the three balancers rotates in a direction opposite to the direction of rotation of the other two, and all are driven simultaneously from the engine crankshaft. The arrangement is such that the balancing device will generate a balancing force $\vec{F}_b$ which cancels out a harmonic component of the vibrating force $\vec{F}_r$, and a balancing moment force $-\vec{M}$ which cancels out an oscillatory moment $\vec{M}$ generated by having the balancing device spaced a distance l from the vibration line S.

The typical vibrating force $\vec{F}_r$ will have a number n of harmonic components, but usually one of these components will tend to dominate. A balancing device of the invention can then be constructed to cancel out the dominant harmonic of the vibrating force $\vec{F}_r$. This will usually be sufficient to assure smooth engine operation.

An embodiment of the invention will now be described by way of example with reference to the attached drawings in which:—

Fig. 1 is a cross-sectional,diagrammatic front view of a water-cooled, four cylinder, four-cycle vertical diesel engine, illustrating the working mechanism of the balancing device of the invention;

Fig. 2 is a partial, diagrammatic perspective view of the balancing device of Fig. 1, showing the three parallel, rotating balancers, and the gear arrangement for driving such from the crankshaft of the engine;

Fig. 3 is a lateral, sectional view taken through the engine shown diagrammatically in Fig. 1 showing the construction thereof, portions of the engine being illustrated in diagrammatic form;

Fig. 4 is a plan view of a cylinder block of the engine of Fig. 3, with a head structure removed to show cylinders and pistons, a fuel-injection camshaft, and connecting driving gears;

Fig. 5 is a rear, elevational view of the interior of the balancing device of Fig. 2, viewed along the line of the arrow V in Fig. 2;

Fig. 6 is a horizontal, sectional view through the balancing device shown in Fig. 5;

Fig. 7 is a vertical, sectional view through the balancing device shown in Fig. 5;

Fig. 8 is a diagrammatic view illustrating the vibration force generating mechanism occurring because of the piston and connecting rod movement in a four-cylinder vertical diesel engine;

Fig. 9 is a diagrammatic side view of the engine of Fig. 8;

Fig. 10 is a vector analysis graph of the centrifugal force vectors generated by the balancing device as applied to the engine of Figs. 8 and 9, the balancing device being shown for 12 successive operating phases of the engine;

Fig. 11 is a graph of the centrifugal force vectors at phase 1 of operation, taken from Fig. 10; and

Fig. 12 is a diagrammatic, cross-sectional front view of an engine similar to Fig. 1, but showing mounted thereon a typical balancing device of the prior art in two, alternative, positions.

The balancing device shown in the drawings is arranged to cancel the 2nd harmonic component of vibrating forces generated by an internal combustion engine, without generating any net rotating moment. In alternative embodiments, the device can be attached as a unit to substantially any position of the engine, spaced away from the vibration line S which passes through the vibration origin point O on the centre-line of the engine crankshaft.

Referring to Fig. 12, which shows a prior art balancing device, the engine $E_p$ includes a crankshaft $4_p$ to which pistons $3_p$ are connected by connecting rods $5_p$. When the crankshaft $4_p$ is rotated, it generates a vibration force $\vec{F}_{rp}$ which is shown directed along a vertical vibration line $S_p$ that passes through the vibrating force origin O on the centre-line of the crankshaft $4_p$. In order to counteract the vibration force $\vec{F}_{rp}$ an engine balancing device $21_p$ is mounted to the bottom of the engine $E_p$ vertically beneath the centre-line of the crankshaft $4_p$.

The balancing device $21_p$ is designed to generate a balancing force $\vec{F}_{bp}$ to cancel out the force $\vec{F}_{rp}$. If the device $21_p$ is located on the vibration line Sp so that the force vector $\vec{F}_{bp}$ is aligned with the force $\vec{F}_{rp}$ it can function properly. An alternative location for the balancing device is shown in broken lines at $21_{p'}$. In this instance, the crankarms of the crankshaft $4_p$ are provided with 100% counterweights $7_{p''}$, shown in broken lines, so that the 1st harmonic component of vibrating force $\vec{F}_{rp}$ is directed horizontally, and the balancing force $\vec{F}_{bp'}$ generated by the relocated device $21_{p'}$ is then effective to balance the vibrating force.

If the balancing device should be mounted in Fig. 12 so that the balancing force generated thereby is not in alignment either vertically or longitudinally with the origin O of the vibration force, then a problem is created. This is illustrated by the location of the balancing force vector $\vec{F}_{bp''}$ in Fig. 12, which is shown by broken lines and is spaced a distance $I_p$ from the vibration line $S_p$. In this circumstance, the vibrating force vector $\vec{F}_{rp}$ and the parallel balancing force vector $\vec{F}_{bp''}$ are separated by the distance $I_p$ with the result that an oscillatory moment $\vec{M}_p$ is generated, which places an undesirable force on the engine $E_p$.

In known balancing devices, if the creation of an oscillatory moment $\vec{M}$ is to be avoided, the locations for a balancing device in a reciprocating piston, vertical engine are essentially limited to two. The first is a position beneath the crankshaft, as shown by the device $21_p$ in Fig. 12. The second location is to place the device in horizontal alignment with the crankshaft, as shown by the device $21_{p'}$ in Fig. 12; this arrangement requires counterweighting of the crankarms of the crankshaft, as has been noted. Both positions add to what are already large cross-sectional measurements of an engine, and thus increase the size of an already bulky assembly.

In the present invention the balancing device is mounted on the engine so that a balance force $\vec{F}_b$ is generated, spaced a certain distance I from the vibration line S. While this creates an oscillatory moment $\vec{M}$, the device of the invention generates a balancing moment $-\vec{M}$. The result is that the balancing device of the invention can be located substantially anywhere on the engine, and advantage can be taken of unused spaces and recesses found about the typical engine while at the same time counteracting vibration.

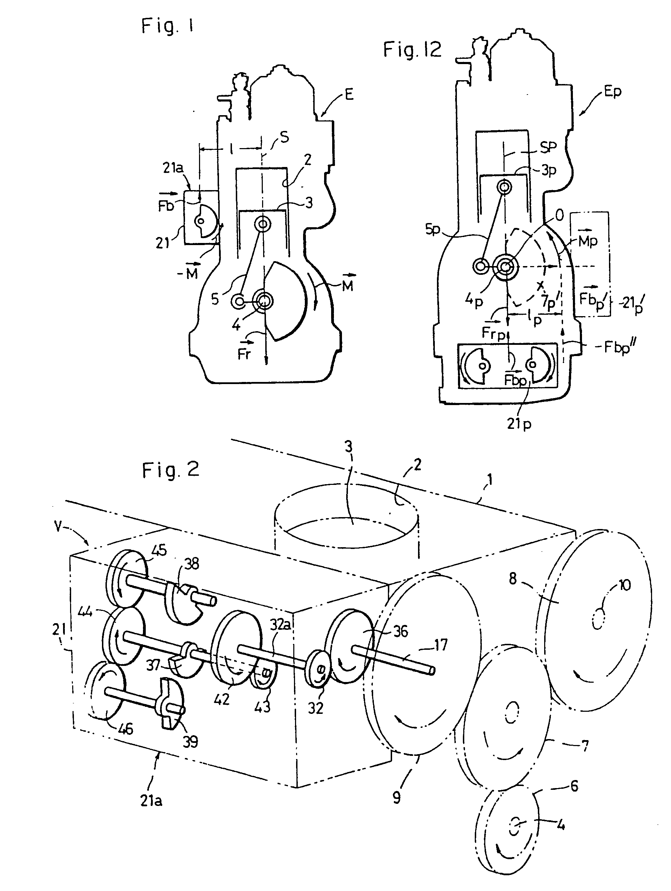

Referring now to Fig. 1, a water-cooled, vertical four-cycle, four cylinder diesel engine is shown generally at E, and incorporates a crankshaft 4 having crankarms thereon to which connecting rods 5 are connected, the connecting rods 5 carrying pistons 3 which reciprocate in cylinders 2. In operation, the engine E generates a vibration force $\vec{F}_r$ which is directed along a vibration line S that passes through the centre of the crankshaft 4.

Mounted on the side of the engine E in a recessed space at a location above the main body of the engine is a balancing device 21 including a balancing unit 21a which is constructed and arranged to generate both a balancing force $\vec{F}_b$ and a balancing moment $-\vec{M}$. Because the balancing force $\vec{F}_b$ is offset from the vibration line S by the distance I, an oscillatory moment $\vec{M}$ is generated; but such is balanced and cancelled by the balancing moment $-\vec{M}$.

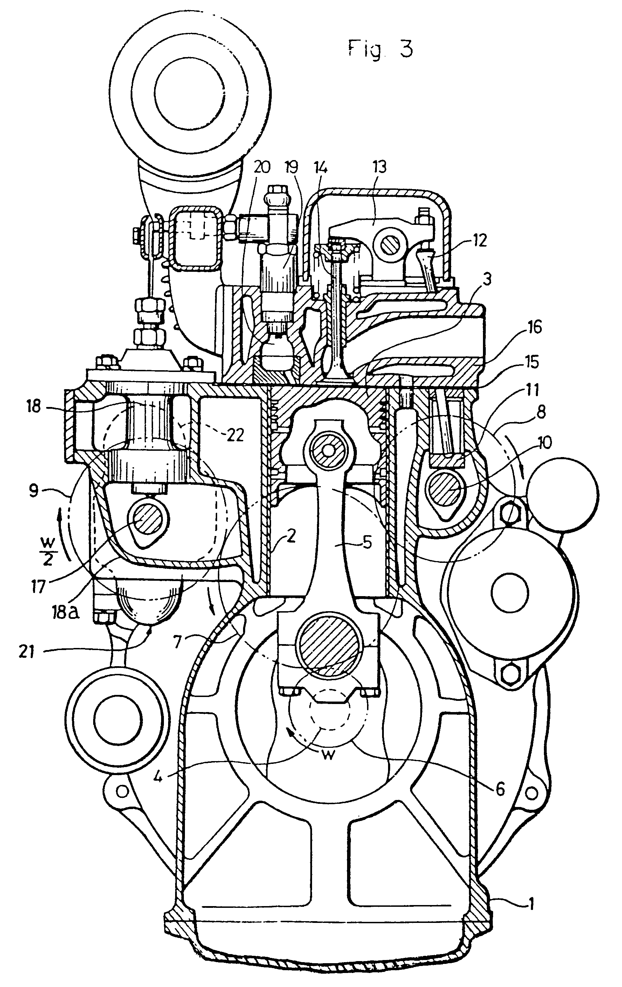

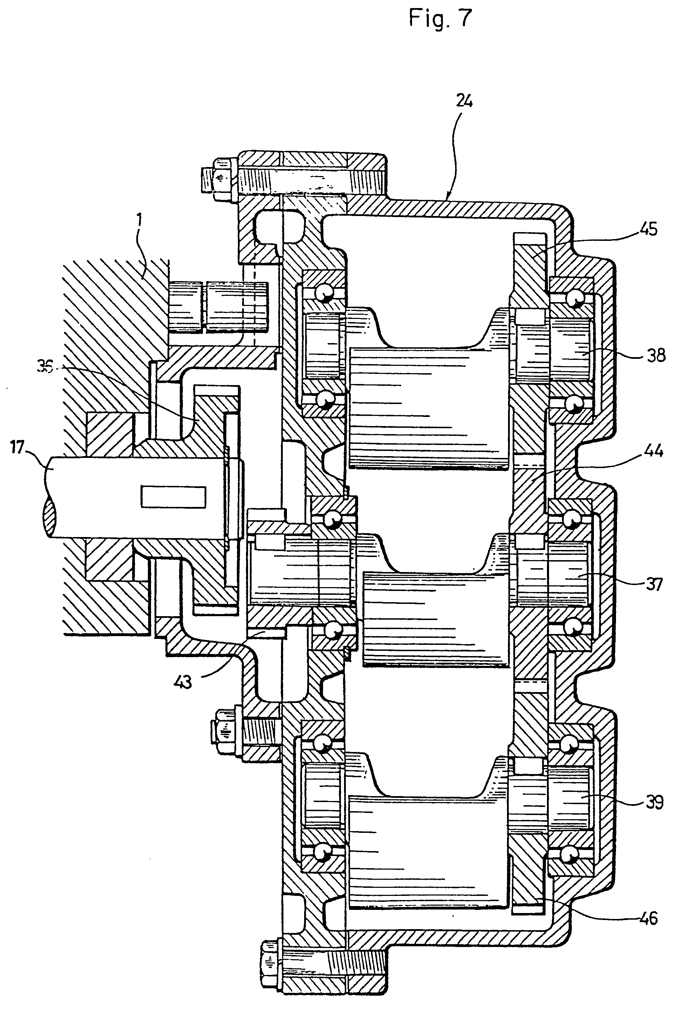

Turning now to Figs. 2—7, the construction of the engine E and the balancing device 21 are shown in greater detail. The cylinders 2 are contained within the engine block 1, and the upper end of the engine block has a head assembly 16 bolted thereto with a gasket 15 interposed therebetween. The head assembly 16 contains combustion chambers 20, and explosion pressure generated by combustion of a fuel-air mixture within the combustion chamber flows into contact with the piston 3 and causes the crankshaft 4 to rotate.

When the crankshaft 4 is rotated a valve-moving camshaft 10 and a fuel-injection camshaft 17 rotate therewith, such rotation being effected by a drive gear 6 carried on the crankshaft 4 which engages gears 8 and 9 carried by the camshafts 10 and 17, respectively. The arrangement of the gears 6, 8 and 9 is such that the camshafts 10 and 17 are driven at one-half the rotating speed of the crankshaft 4.

The valve-moving camshaft 10 opens and closes intake and exhaust valves 14, through tappets 11, push rods 12 and rocker arms 13, in a conventional manner. The fuel-injection camshaft 17 effects operation of a fuel-injection pump 18 mounted thereabove, to cause fuel to be injected into the combustion chambers 20. The fuel-injection pump 18 is housed in a casing 18a which is part of the engine block 1, the casing 18a being arranged to project laterally outwardly from the front end of the engine E.

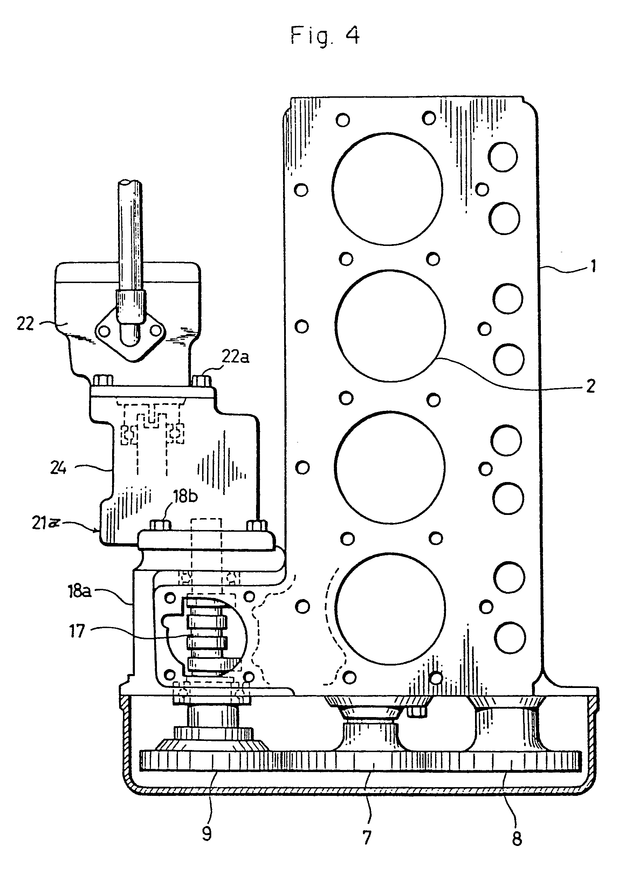

The balancing unit 21a of the balancing device 21 and the engine's hydraulic pump 22 are both attached to the rear side of the fuel-injection pump casing 18a. This arrangement is particularly well-shown in Fig. 4 and, by such, the hydraulic pump 22 and the balancing unit 21a are positioned in a location on the engine E where they do not add greatly to its overall dimensions. Both the hydraulic pump 22 and the balancing unit 21a are driven from the fuel-injection camshaft 17, and thus indirectly from the engine crankshaft 4.

Turning now to the balancing device 21, as has been described, it is arranged both to cancel a component of the vibrating force $\vec{F}_r$ of the engine E, and to cancel the moment $\vec{M}$ generated because the balancing unit 21a is positioned a distance l from the engine's vibration line S. When working with a four-cycle, four-cylinder engine, the vibrating force $\vec{F}_r$ will typically have a number of harmonic components. Of these, the 2nd harmonic component is typically the largest and therefore the balancing device 21 is arranged to cancel the 2nd harmonic component of the vibrating force $\vec{F}_r$.

The balancing unit 21a of the balancing device 21 includes a casing 24, one end of which is removably attached to the casing 18a of the fuel-injection pump 18 by bolts 18b. The hydraulic pump 22 is connected to the other end of the balancing unit casing with bolts 22a. Rotatably mounted within the casing 24 are three rotating balancers 37, 38 and 39, arranged so that their axes of rotation are parallel to each other, and parallel to the axis of rotation of the crankshaft 4. The centre balancer 37 is placed between the upper and lower balancers 38 and 39, and the three balancers 37, 38 and 39 are interconnected by balancer gears 44, 45 and 46, respectively, arranged so that the centre balancer 37 will rotate in a direction opposite to the upper and lower balancers 38 and 39. The balancer gears 44, 45 and 46 are of the same diameter, so that all three balancers will rotate at the same speed.

An intermediate shaft 32a is also mounted in the casing 24, and extends parallel to the axis of rotation of the balancer 37. The intermediate shaft 32a carries a small gear 32 and a large gear 42, the latter being in engagement with a small gear 43 carried on the axis of rotation of the centre balancer 37.

The outer end of the fuel-injection camshaft 17 carries a large drive gear 36 thereon, which meshes with the gear 32. Thus, a two-stage drive train is established for driving the three balancers 37, 38, and 39 from the fuel-injection camshaft 17, the sizes of the respective gears in the drive train being chosen so that the balancers 37, 38 and 39 are rotated at twice the speed of the engine crankshaft 4.

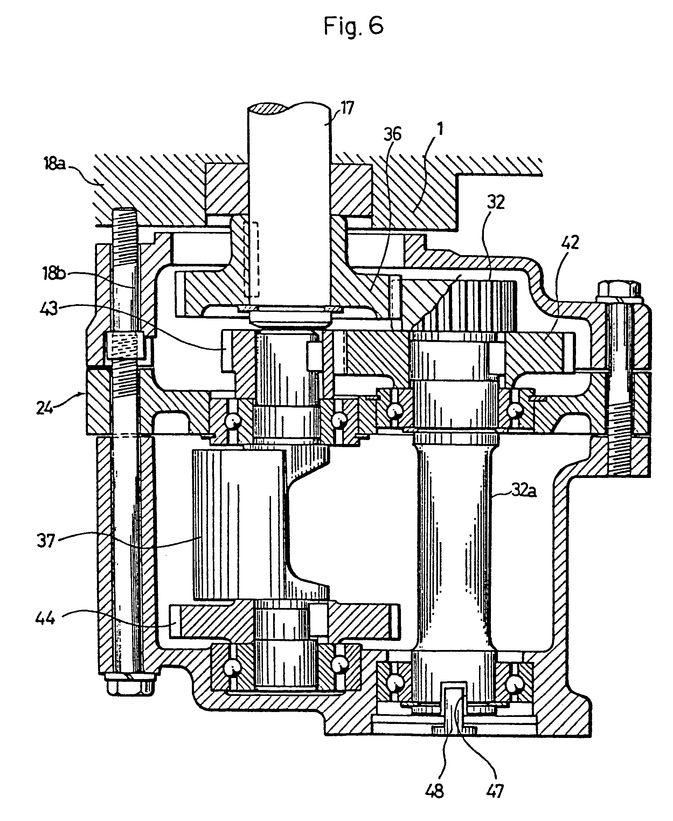

The drive shaft 48 of the hydraulic pump 22 is driven from the intermediate shaft 32a, as shown in Fig. 6. A disengageable coupler element 47 is utilized to connect the pump drive shaft 48 to the intermediate shaft 32a.

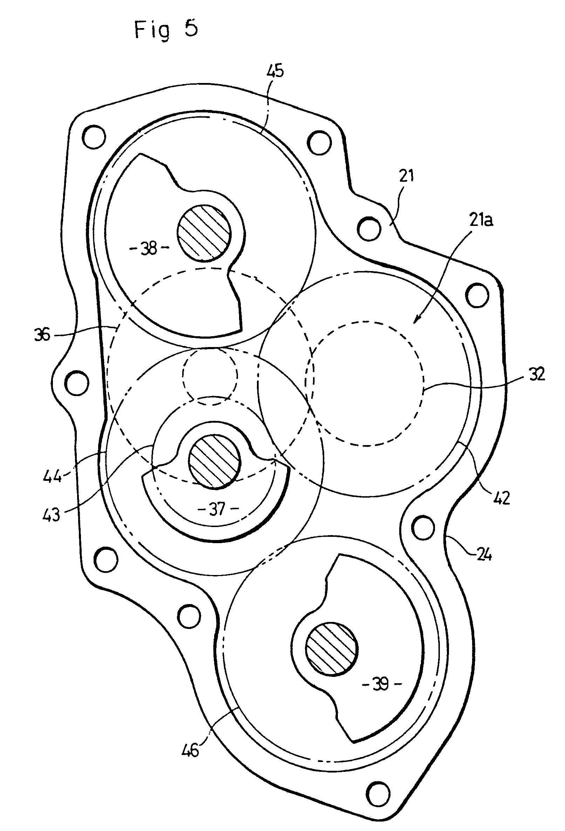

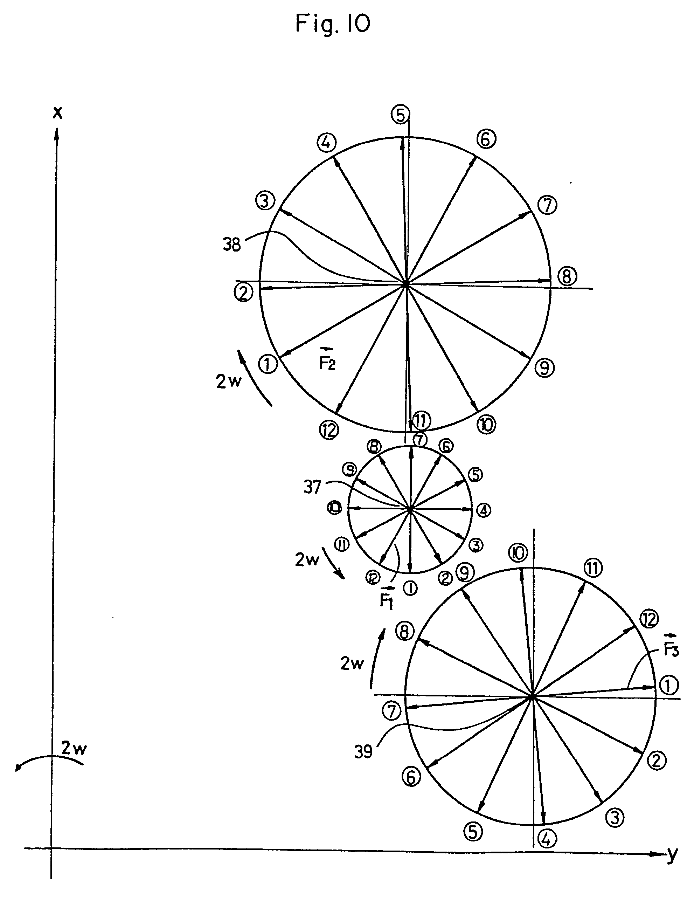

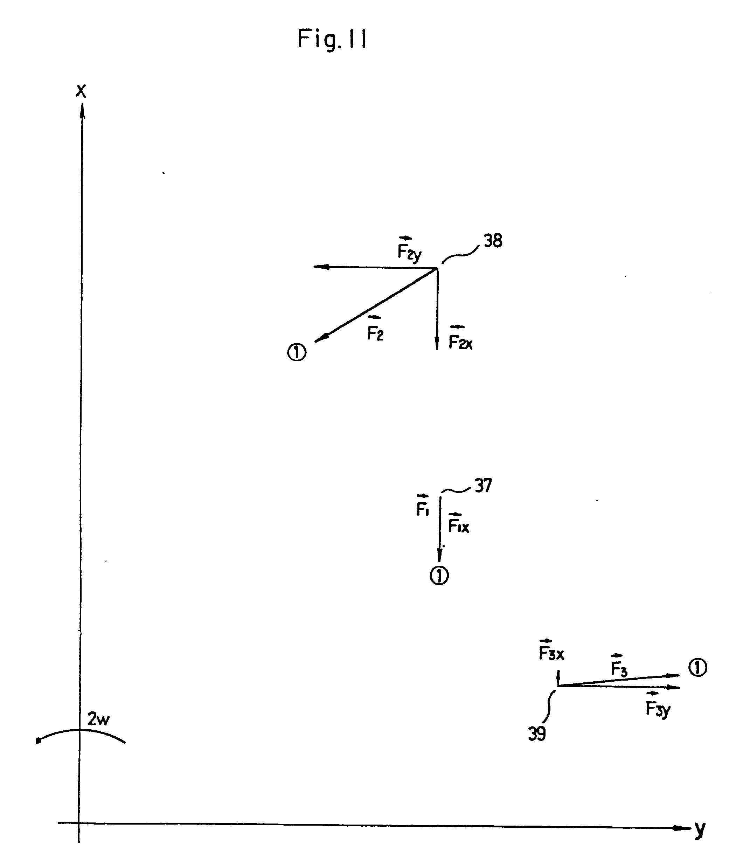

Referring now to the graphs of Figs. 10 and 11, a brief explanation of the manner of operation of the balancing device 21 will be given. In Fig. 10 there is shown a vector analysis of the balancing device 21, drawn from the back side thereof as viewed in Figs. 2 and 5. The vector analysis diagram of Fig. 10 shows balancing force vectors $\vec{F}_1$, $\vec{F}_2$ and $\vec{F}_3$, generated as centrifugal forces by the rotating balancers 37, 38 and 39, respectively. Note that in Fig. 10 the centre balancer 37 is shown to be rotating in a direction opposite to the direction of rotation of the upper and lower balancers 38 and 39, as described earlier. The balancing force vector $\vec{F}_1$ generated by the center rotating balancer 37 is relatively small and rotates counterclockwise, whereas the balancing force vectors $\vec{F}_2$ and $\vec{F}_3$ generated by the balancers 38 and 39, respectively, are relatively large and rotate clockwise.

In Fig. 10, each of the vectors $\vec{F}_1$, $\vec{F}_2$ and $\vec{F}_3$ is associated with a symbol ①, which shows the initial phase when any selected piston 3 of the engine E is at its top dead point. The vectors each rotate continuously from the position ① to positions ②, ③, ④, ... ⑫, with a constant rotating speed. The resultant force of said vectors $\vec{F}_1$, $\vec{F}_2$ and $\vec{F}_3$ generate, taken as a whole, the balancing force $\vec{F}_b$ and the balancing moment $-\vec{M}$, as shown in Fig. 1 of the drawings. The balancing force $\vec{F}_b$ is established to cancel out the 2nd harmonic component of the vibrating force $\vec{F}_r$.

The balancing moment $-\vec{M}$ is generated by the three balancers 37, 38 and 39, and is spaced a distance l from the vibration line S passing through the origin of the vibrating force $\vec{F}_r$. The balancing force $\vec{F}_b$ is also spaced from the vibration line S by the distance l, which creates the oscillatory moment $\vec{M}$. By balancing the magnitude of the balancing moment $-\vec{M}$ with the oscillatory moment $\vec{M}$, the two moments are made to cancel out.

Placing this brief explanation into mathematical expressions, and referring to Figs. 10 and 11, the balancing device 21 is designed and arranged so that the vectors $\vec{F}_1$, $\vec{F}_2$ and $\vec{F}_3$ satisfy the following relationships:

(1) $(\vec{F}_{1x}+\vec{F}_{2x}+\vec{F}_{3x})+\vec{F}_r=0$

(2) $(\vec{F}_{1y}+\vec{F}_{2y}+\vec{F}_{3y})=0$

(3) $\vec{M}_y+\vec{M}_x=0$

Wherein:

$\vec{F}_{1x}, \vec{F}_{2x}, \vec{F}_{3x}$=The x direction component of $\vec{F}_1, \vec{F}_2, \vec{F}_3$

$\vec{F}_{1y}, \vec{F}_{2y}, \vec{F}_{3y}$=The y direction component of $\vec{F}_1, \vec{F}_2, \vec{F}_3$

$\vec{M}_x$=The oscillatory moment about the centre of the crankshaft 4, generated by $\vec{F}_{1x}, \vec{F}_{2x}, \vec{F}_{3x}$

$\vec{M}_y$=The oscillatory moment about the centre of the crankshaft 4, generated by $\vec{F}_{1y}, \vec{F}_{2y}, \vec{F}_{3y}$

Explaining relationships (1), (2) and (3) in reference to Fig. 1, $\vec{M}_x$ equates to the oscillatory moment

$\vec{M}$, $\vec{M}_y$ equals $-\vec{M}$ and $\vec{F}_{1x}+\vec{F}_{2x}+\vec{F}_{3x}$

equates to the balancing force $\vec{F}_b$.

Therefore, from the above expressions (1), (2) and (3):

$$\vec{F}_b+\vec{F}_r=0$$

$$-\vec{M}+\vec{M}=0$$

Consequently, it is seen that the vibrating force $\vec{F}_r$ and the oscillatory moment $\vec{M}$ are cancelled by means of the balancing device 21, which is designed so that it can be attached to any particular chosen eccentric position on the engine E.

In order to facilitate understanding and practice of the embodiment of the invention, a more detailed mathematical explanation thereof will now be offered. It is assumed that the balancing device 21 will be applied to a four-cycle, four-cylinder, in-line type engine.

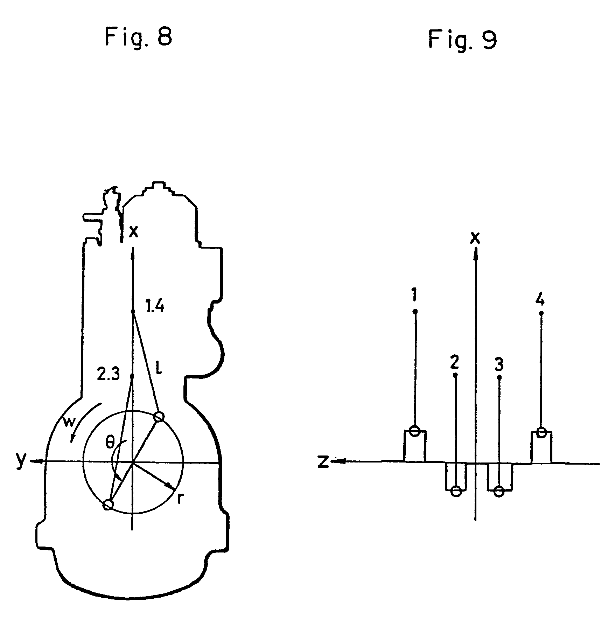

Referring now to Figs. 8 and 9, the vibrating force $\vec{F}_r$ generated by the reciprocating inertia force in such an engine is as follows:

(4) $\vec{F}_r=F_x \cdot \vec{e}_x+F_y\vec{e}_y+F_z\vec{e}_z$

(5) $F_x=4\ mrw^2\ (0+A_2\ \cos\ 2\theta+0+A_4\ \cos\ 4\theta+...)$

(6) $F_y=0$

(7) $F_z=0$

Wherein:

$\vec{e}_x, \vec{e}_y, \vec{e}_z$=The unit vector directing along the X, Y and Z axes, respectively.
$F_x, F_y, F_z$=The magnitude of the x, y, z axes component of the force $\vec{F}_r$, respectively.
r=The crank radius
m=The reciprocating mass for one cylinder
$\theta$=The crankshaft rotation angle from the top dead point of any piston
w=The rotating speed of the crankshaft, which is in accord with the equation: $\theta=wt$
t=Time
and $A_i$=The coefficient referring to the $i^{th}$ harmonic component of $\vec{F}_r/4\ mrw^2$; thus,

$$A_2=\rho+1/4\ \rho^3+15/128\ \rho^5+...$$

$$A_4=-1/4\ \rho^3-3/16\ \rho^5+...$$

in which

$\rho=r/l$ where l=the length of the connecting rod

It is known that the 4th and higher harmonic components of the vibration force $\vec{F}_r$ are equal to or less than 1/30 of the 2nd harmonic component. Therefore, in this instance, the 2nd harmonic component is picked out to be cancelled by the balancing device 21 of the invention. And thus:

(8) $(\vec{F}_r)_2=F_{rx} \cdot \cos\ 2\theta \cdot \vec{e}_x$

Wherein:
$(\vec{F}_r)_2$=The said 2nd harmonic component of $\vec{F}_r$

(8a) $F_{rx}=4\ mrw^2\ (\rho+1/4\rho^3+15/128\rho^5+...)$

Referring to the centrifugal forces generated by the device 21 and the oscillatory moment generated by its rotating balancers:

(9) $\vec{R}_i=x_i \cdot \vec{e}_x+y_i \cdot \vec{e}_y$

Wherein:

$\vec{R}_i$=The symbol showing the position of No. i rotating blancer shaft that is, the displacement vector
$x_i, y_i$=The magnitude of the x, y components of the vector $\vec{R}_i$, respectively
i=1, 2, 3...N
N=The total of rotating balancers included in the balancing device

It was stated earlier that in this embodiment the rotating balancers 37, 38 and 39 are rotated at double the rotating speed of the crankshaft 4. With this assumption, the resultant centrifugal force vector $\vec{F}_i$ is obtained as follows:

$$(10) \quad \vec{F}_i = F_{Bi} [\cos 2 (\theta + \alpha_i) \cdot \vec{e}_x + \sin 2k_i (\theta + \alpha_i) \cdot \vec{e}_y]$$

Wherein:

$\vec{F}_i$ = The centrifugal force vector generated by the No. i rotating balancer, that is, No. i balancing force vector

$$F_{Bi} = 4m_{Bi} \cdot r_{Bi} \cdot w^2,$$

in which
$m_{Bi}$ = The eccentric mass of said No. i rotating balancer
$r_{Bi}$ = The eccentric radius of said $m_{Bi}$

$\alpha_i$ = The initial phase of said No. i rotating balancer
$k_i$ = The symbol showing the rotating direction of said No. i rotating balancer, defined in the right-hand coordinate system as follows:
 when the rotating direction is plus, $k_i = +1$
 when the rotating direction is minus, $k_i = -1$
$\theta$, w and t = As described hereinbefore

Thus, the resultant balancing force of said $\vec{F}_i$ is calculated as follows:

(11)

$$(\vec{F}_B)_2 = \sum_{i=1}^{N} \vec{F}_i = (F_{xc} \cdot \cos 2\theta + F_{xs} \cdot \sin 2\theta) \cdot \vec{e}_x + (F_{yc} \cdot \cos 2\theta + F_{ys} \cdot \sin 2\theta) \cdot \vec{e}_y$$

Wherein:

$$F_{xc} = \sum_{i=1}^{N} x_{ci}, \text{ with } x_{ci} = F_{Bi} \cdot \cos 2\alpha$$

$$F_{xs} = -\sum_{i=1}^{N} x_{si}, \text{ with } x_{si} = F_{Bi} \cdot \sin 2\alpha$$

$$F_{yc} = \sum_{i=1}^{N} k_i \cdot x_{si}$$

$$F_{ys} = \sum_{i=1}^{N} k_i \cdot x_{ci}$$

The resultant oscillatory moment generated by all of the rotating balancers is calculated as follows:

(12)

$$(\vec{M})_2 = \sum_{i=1}^{N} (\vec{R}_i \times \vec{F}_i)$$

$$= (M_{Bc} \cdot \cos 2\theta + M_{Bs} \cdot \sin 2\theta) \cdot \vec{e}_z$$

Wherein:

$$M_{Bc} = \sum_{i=1}^{N} (k_i \cdot x_i \cdot x_{si} - y_i \cdot x_{ci})$$

$$M_{Bs} = \sum_{i=1}^{N} (k_i \cdot x_i \cdot x_{ci} + y_i \cdot x_{si})$$

In order to cancel the vibrating force $\vec{F}_r$, the balancing device 21 must be designed to satisfy the following relationships:

I. Generate a balancing force $(\vec{F}_B)_n$ which cancels the vibrating force $(\vec{F}_r)_n$ caused by the piston and crank mechanism of the engine E; and

II. The oscillatory moment $(\vec{M})_n$ caused by $(\vec{F}_r)_n$ and $(\vec{F}_B)_n$ must be equal to zero, that is, the sum of the oscillatory moments around the crankshaft 4 must be equal to zero, which rotating moments are generated by centrifugal forces of the rotating balancers.

In relationships I and II, the symbol n of $(\ )_n$ shows the nth harmonic component, and in this embodiment n equals 2. The two relationships I and II can be expressed mathematically as follows:

$$\text{I.} \quad (\vec{F}_B)_2 = \sum_{i=1}^{N} \vec{F}_i = -(\vec{F}_r)_2$$

$$\text{II.} \quad (\vec{M})_2 = 0$$

If equations (8), (11) and (12) are now applied to equations I and II, the following results:

$$(13) \quad (F_{xc} \cdot \cos 2\theta + F_{xs} \cdot \sin 2\theta)\vec{e}_x + (F_{yc} \cdot \cos 2\theta + F_{ys} \cdot \sin 2\theta)\vec{e}_y = -F_{rx} \cdot \cos 2\theta \cdot \vec{e}_x$$

(equations (8) and (11)).

$$(14) \quad (M_{Bc} \cdot \cos 2\theta + M_{Bs} \sin 2\theta) \cdot \vec{e}_z = 0$$

(equation (12)).

Therefore:
$$F_{xc} = -F_{rx}$$
$$F_{xs} = 0$$

$$(15) \quad F_{yc} = 0$$
$$F_{ys} = 0$$
$$M_{Bc} = 0$$
$$M_{Bs} = 0$$

and, from equation (8a)

$$F_{rx} = 4 \ mrw^2 (\rho + 1/4\rho^3 + 15/128\rho^5 \ldots)$$

$$F_{xc} = \sum_{i=1}^{N} x_{ci}$$

(16)

$$F_{xs} = -\sum_{i=1}^{N} x_{si}$$

$$F_{yc} = \sum_{i=1}^{N} k_i \cdot x_{si}$$

$$F_{ys} = \sum_{i=1}^{N} k_i \cdot x_{ci}$$

$$M_{Bc} = \sum_{i=1}^{N} (k_i \cdot x_i \cdot x_{si} - y_i \cdot x_{ci})$$

$$M_{Bs} = \sum_{i=1}^{N} (k_i \cdot x_i \cdot x_{ci} + yi \cdot x_{si})$$

For the relationships set forth in (16), and recognizing the position $(x_i, y_i)$ of the rotating balancers as known, $x_{ci}$ and $x_{si}$ can be calculated by solving a 2N dimensional simple simultaneous equation obtained from the expressions of (15).

Utilizing expression (11), $x_{ci}$, $x_{si}$ and $F_{Bi}$ are as follows:

$$X_{ci} = F_{Bi} \cdot \cos 2\alpha_i$$

$$x_{si} = F_{Bi} \cdot \sin 2\alpha_i$$

$$F_{Bi} = 4 \cdot m_{Bi} \cdot r_{Bi} \cdot w^2$$

Therefore, an attached moment (i.e.,

$$M_{Bi} \cdot r_{Bi} = F_{Bi}/4w^2)$$

and initial phases (i.e., $2\alpha_i$) of each of the rotating balancers can be calculated from $x_{ci}$ and $x_{si}$. Consequently, it is possible to determine the attached moment $m_{Bi} \cdot r_{Bi}$ and the initial phase $2\alpha_i$ of the rotating balancers satisfying the conditions I and II, described earlier, consisting of N rotating shafts, with each of them being attached to a chosen position of the engine E.

The reason for the number of rotating balancers 37, 38 and 39 being three is in this embodiment of the invention is as follows. In order to generate a balancing force $\vec{F}_b$ that will cancel the vibrating force $\vec{F}_r$, fundamentally two rotating balancers would be enough. And in order to generate a balancing moment $-\vec{M}$ to cancel the oscillatory moment $\vec{M}$, it would be enough to arrange these two rotating balancers separately in their upper and lower positions.

However, if this is done, the phase of the balancing moment $-M$ loses 1/4 of its cycle of rotation (i.e. 45% of the angle of rotation of the crankshaft in the case of the illustrated preferred embodiment) from the oscillatory moment $\vec{M}$. In order to modify this phase delay, one or more rotating balancers must be added to the basic two. Three balancers will usually suffice, as in this embodiment.

Using the concepts and principles set out herein, it is possible to determine the value of the balancing force $\vec{F}_b$ so that the balancing moment $-\vec{M}$ generated by the balancing balancing force $\vec{F}_b$ in the device of the invention can cancel both the resulting oscillatory moment $\vec{M}$, and also a rolling moment $-\vec{M}_o$ inherent in a reciprocating engine. This rolling moment $-\vec{M}_o$ is an inherent unbalanced inertia moment around the crankshaft of the engine and is caused by piston and crank movement. In engines of certain numbers of cylinders this rolling moment is very undesirable. Further, should it be desired to cancel the 1st harmonic component of the vibrating force $\vec{F}_r$, one of the rotating balancers 37, 38 or 39 can be fixed on the crankshaft 4.

It has also been found that under the condition wherein the respective rotating centre axes of the rotating balancers 37, 38 and 39 is normal to an imaginary plane including the vibration line S, the rotation balancers 37, 38 and 39 directing in any direction can be attached to such locations on the engine E as the front, back, oblique front and oblique back thereof. The engine E can also be changed from a four-cylinder engine to a multi-cylinder or a single-cylinder engine.

Returning again to the N harmonic components of the vibrating force $\vec{F}_r$, it is to be understood that the balancing device 21 can be designed to cancel the 1st harmonic component or any one of the 3rd and higher components, if it is so desired, utilizing the concepts and principles as set forth herein. The balancing device 21 can also be applied to existing internal combustion engines, without requiring replacement or exchange of crankcases or oil pans, and without major reconstruction of the engines.

**Claims**

1. A reciprocating piston, internal combustion engine (E) having a balancing device (21) for generating a balancing force to counter a vibrating force $(\vec{F}_r)$ generated during operation of the engine (E) and directed along a vibration line (S) passing through the centre-line of a crankshaft (4) of the engine (E), characterised in that the device (21) is positioned with the line of action of the balancing force spaced from and parallel to the vibration line (S) and in that the device comprises balancing means for generating a balancing force $(\vec{F}_b)$ chosen to cancel a selected harmonic component of the vibrating force $(\vec{F}_r)$ and for generating a balancing moment $(-\vec{M})$ to cancel the oscillatory moment $(\vec{M})$ generated about the centre-line of the crankshaft (4) by the balancing force $(\vec{F}_b)$.

2. An engine according to claim 1, characterised in that the balancing means comprise at least three eccentric-mass balancers (37, 38, 39) arranged for rotation about respective axes, each extending parallel to the axis of the crankshaft, at least one (37) of the balancers being arranged to be rotated in a direction opposite to that of at least two (38, 39) of the remaining balancers, and in that the engine includes drive means for driving the balancers from its crankshaft (4).

3. An engine according to claim 2, characterised in that there are three rotating balancers (37, 38, 39) and the drive means are constructed to rotate the centre one balancer (37) in a direction opposite to that of two outer balancers (38, 39).

4. An engine according to claim 2 or 3, characterised in that the drive means comprise meshed gears (6, 7, 9, 36, 32, 42, 43, 44, 45, 46).

5. An engine according to claim 3 or claim 4, characterised in that the selected harmonic component is the second and that the drive means are arranged to rotate all three balancers (37, 38, 39) at a rate twice that of the crankshaft (4).

6. An engine according to any one of claims 2 to 5, characterised in that the drive means include a camshaft (17) of a fuel-injection unit of the engine.

7. An engine according to any preceding claim, characterised in that the balancing moment (−$\vec{M}$) is chosen to cancel both the oscillatory moment ($\vec{M}$) and a rolling moment of the engine.

8. An engine according to any preceding claim, characterised in that the balancing means are contained within a detachable housing (24).

**Revendications**

1. Moteur (E) à combustion interne et piston alternatif comportant un dispositif d'équilibrage (21) pour engendrer une force d'équilibrage destinée à contrer une force de vibration ($\vec{F_r}$) engendrée au cours du fonctionnement du moteur (E) et dirigée suivant un axe de vibration (S) passant par l'axe d'un vilebrequin (4) du moteur (E), caractérisé en ce que le dispositif (21) est disposé de façon que l'axe d'action de la force d'équilibrage soit espacé de l'axe de vibration (S) et soit parallèle à celui-ci et en ce que le dispositif comporte des moyens d'équilibrage pour engendrer une force d'équilibrage ($\vec{F_b}$) choisie pour annuler une composante harmonique choisie de la force de vibration ($\vec{F_r}$) et pour engendrer un moment d'équilibrage (−$\vec{M}$ pour annuler le moment d'oscillation ($\vec{M}$) autour de l'axe du vilebrequin (4) par la force d'équilibrage ($\vec{F_b}$).

2. Moteur suivant la revendication 1, caractérisé en ce que les moyens d'équilibrage comprennent au moins trois organes d'équilibrage à masse excentrée (37, 38, 39) agencés pour tourner autour d'axes respectifs, chacun de ces axes étant parallèle à l'axe du vilebrequin, au moins l'un (37) des organes d'équilibrage étant agencé pour être entraîné en rotation dans un sens opposé à celui d'au moins deux (38, 39) des autres organes d'équilibrage, et en ce que le moteur comprend des moyens d'entraînement pour entraîner lesdits organes à partir du vilebrequin (4).

3. Moteur suivant la revendication 2, caractérisé en ce qu'il est prévu trois organes d'équilibrage rotatifs (37, 38, 39) et en ce que les moyens d'entraînement sont adaptés pour entraîner en rotation l'organe d'équilibrage (37) du milieu dans un sens opposé au sens de rotation des deux organes d'équilibrage extérieurs (38, 39).

4. Moteur suivant l'une quelconque des revendications 2 ou 3, caractérisé en ce que les moyens d'entraînement comprennent des pignons (6, 7, 9, 36, 32, 42, 53, 44, 45, 46) qui engrènent ensemble.

5. Dispositif suivant l'une quelconque des revendications 3 ou 4, caractérisé en ce que la composante harmonique choisie est la seconde et en ce que les moyens d'entraînement sont agencés pour faire tourner les trois organes (37, 38, 39) à une vitesse double de celle du vilebrequin (4).

6. Dispositif suivant l'une quelconque des revendications 2 à 5, caractérisé en ce que les moyens d'entraînement comportent un arbre à cames (17) d'un dispositif d'injection de combustible du moteur.

7. Moteur suivant l'une quelconque des revendications précédentes, caractérisé en ce que le moment d'équilibrage (−$\vec{M}$) est choisi pour annuler à la fois le moment d'oscillation ($\vec{M}$) et un moment de roulis du moteur.

8. Moteur suivant l'une quelconque des revendications précédentes, caractérisé en ce que les moyens d'équilibrage sont contenus dans un carter amovible (24).

**Patentansprüche**

1. Kolbenbrennkraftmaschine (E) mit einer Ausgleichsvorrichtung (21) zur Erzeugung einer Ausgleichskraft, welche ener Vibrationskraft ($\vec{F_r}$), die im Betrieb der Maschine (E) entsteht und entlang einer durch die Mittellinie einer Kurbelwelle (4) dr Maschine (E) verlaufenden Vibrationslinie (S) gerichtet ist, entgegenwirken soll, dadurch gekennzeichnet, dass die Vorrichtung (21) so angeordnet ist, dass die Wirkungslinie der Ausgleichskraft auf Abstand parallel der Vibrationslinie (S) liegt, und dass die Vorrichtung Ausgleichsglieder zur Erzeugung einer ausgewählten Ausgleichskraft ($\vec{F_b}$) zur Aufhebung einer bestimmten harmonischen Komponente der Vibrationskraft ($\vec{F_r}$) und zur Erzeugung eines Ausgleichsmoments (−$\vec{M}$) zur Aufhebung des durch die Ausgleichskraft ($\vec{F_b}$) um die Mittellinie der Kurbelwelle (4) erzeugten Oszillationsmoments ($\vec{M}$) umfasst.

2. Maschine nach Anspruch 1, dadurch gekennzeichnet, dass die Ausgleichsglieder mindestens drei exzentrische Ausgleichsmassen (37, 38, 39) umfassen, die um ihre jeweiligen Achsen drehbar angeordnet sind, welche sich jeweils parallel zur Achse der Kurbelwelle erstrecken, wobei mindestens eine (37) der Ausgleichsmassen um Umlauf in der der Drehrichtung mindestens zweier (38, 39) der verbleibenden Ausgleichsmassen entgegengesetzten Drehrichtung angeordent, ist, und dass die Maschine eine Einrichtung zum Antrieb der Ausgleichsmassen von ihrer Kurbelwelle (4) her umfasst.

3. Maschine nach Anspruch 2, dadurch gekennzeichnet, dass drei umlaufende Ausgleichsmassen (37, 38, 39) vorhanden sind und die Antriebseinrichtungen so gebaut sind, dass sie die mittlere Ausgleichsmasse (37) in einer der Drehrichtung der beiden äusseren Ausgleichsmassen (38, 39) entgegengesetzten Richtung antreiben.

4. Maschine nach Anspruch 2 oder 3, dadurch gekennzeichnet, dass die Antriebseinrichtungen miteinander in Eingriff stehende Zahnräder (6, 7, 9, 36, 32, 42, 43, 44, 45, 46) umfassen.

5. Maschine nach Anspruch 3 oder 4, dadurch gekennzeichnet, dass die ausgewählte harmonische Komponente die zweite ist, und dass die Antriebseinrichtungen so angeordnet sind, dass sie alle drei Ausgleichsmassen (37, 38, 39) mit der doppelten Geschwindigkeit der Kurbelwelle (4) antreiben.

6. Maschine nach einem Ansprüche 2 bis 5, dadurch gekennzeichnet, dass die Antriebsvorrichtungen eine Nockenwelle (17) einer Brennstoffeinspritzeinheit der Maschine einschliessen.

7. Maschine nach einem der vorhergehenden Ansprüche, dadurch gekennzeichnet, dass das Ausgleichsmoment $(-\bar{M})$ so gewählt ist, dass es sowohl das Oszillationsmoment $(\bar{M})$ une ein Rollmoment der Maschine aufhebt.

8. Maschine nach einem der vorhergehenden Ansprüche, dadurch gekennzeichnet, dass die Ausgleichsglieder innerhalb eines abnehmbaren Gehäuses (24) angeordnet sind.

Fig. 1

Fig. 12

Fig. 2

Fig. 3

Fig. 4

Fig 5

# Fig. 6

Fig. 7

Fig. 8

Fig. 9

Fig. 10

Fig. 11